# EUROPEAN PATENT APPLICATION

(11) **EP 0 735 782 A2**
(43) Date of publication of application: **02.10.1996**
(21) Application number: 96105065.5
(22) Date of filing: 29.03.1996
(51) Int. Cl.: H04N 9/877

(54) **Motion picture play apparatus capable of returning from trick play to normal play**

(30) Priority: 31.03.1995 JP 76505/95
(71) Applicant: KABUSHIKI KAISHA TOSHIBA, Kawasaki-shi (JP)
(72) Inventor: Minami, Takaaki, c/o Intellectual Property Div., Minato-ku, Tokyo 105 (JP); Kai, Naoyuki, c/o Intellectual Property Div., Minato-ku, Tokyo 105 (JP)
(74) Representative: Zangs, Rainer E., Dipl.-Ing.

(57) **Abstract**

The present invention is structured to have a new mechanism of a synchronous control of a video and an audio and a buffer management. Digital data from a medium (11) storing digital data is separated into audio data and video data by a separation circuit (131). An audio buffer (132) and a video buffer (133) store data from the separation circuit (131), respectively. An audio decoder (14) and a video decoder (15) decode data of each of the audio buffer (132) and the video buffer (133), respectively. A variable counter circuit (12) controls timing when each of the audio decoder (14) and the video decoder (15) fetches data from each of the audio buffer (132) and the video buffer (133) in accordance with an outer control signal of a microcomputer (18).

## Description

The present invention relates to compression/expansion expansion of digital motion picture/audio data, particularly to a motion picture play apparatus having a new mechanism of controlling the synchronization of a video and an audio and managing buffers, and a motion picture play processor.

In MPEG, which is an international standard relating to compression and expansion of a motion picture, compression and expansion of an audio, and synchronization of the audio and the motion picture, there is defined a hypothetical decoder, that is a STD (System Target Decoder), in order to perform the following operations.

More specifically, the audio and the video are synchronized with each other, and a buffer is managed so as not to cause overflow and underflow of audio and video to be stored in the respective buffers.

The above STD comprises a system decoder (separation circuit), buffers, and decoders.

The above system decoder is used to separate composite data of multiplexed video and audio data into data for audio and data for video, respectively.

The above buffers include an audio buffer and a video buffer in order to store the respective separated data (compressed data).

The above decoders includes an audio decoder and a video decoder in order to decode data sent from the buffers.

Moreover, in STD, audio and video data are decoded and presented instantaneously. That is, following three events occur at the same time:
(i) extraction of compressed data from audio/video buffer
(ii) decoding extracted data
(iii) presentation of decoded audio/video.

Compressed data should be so encoded that STD can decode them without overflow and underflow in its buffers. And, actual decoders should be able to decode compressed data encoded above-mentioned way without overflow and underflow in its buffers.

The compressed data includes the following information.
(1) The capacity of each of the buffer of STD assumed in preparing data is marked in the head of the compressed data.
(2) A SCR (System Clock Reference), which shows time when multiplexed data enters the STD, is inserted in mid course of compressed data.
(3) A PTS (Presentation Time Stamp), which shows time when each of separated data, that is, audio data and video data are extracted from the STD, is provided to each of the audio and the video, and inserted in mid course of compressed data.

Then, if compressed data enters the STD at the time, which the SCR shows, compressed data of the audio is extracted at the time, which the PTS of the audio shows, and compressed data of the video is extracted at the time, which the PTS of the audio shows, compressed data is encoded in order that the audio and the video are synchronized with each other, and that any buffer is managed so as not to cause the overflow and the underflow of the audio and the video to be stored in the respective buffers.

The values of SCR and PTS are measured in the number of periods of a 90 kHz clock, called system clock. SCR, audio PTS, and video PTS, defined by means of STD, appear in compressed data (bitstream) sent from digital storage medium (DSM). A decoder has a counter called "STC counter" counted up at 90 kHz. Audio data are extracted from the audio buffer when the value of STC counter equals to audio PTS (above-mentioned item (2)). Video data are extracted from the video buffer when the value of STC counter equals to video PTS (above-mentioned item (3)).

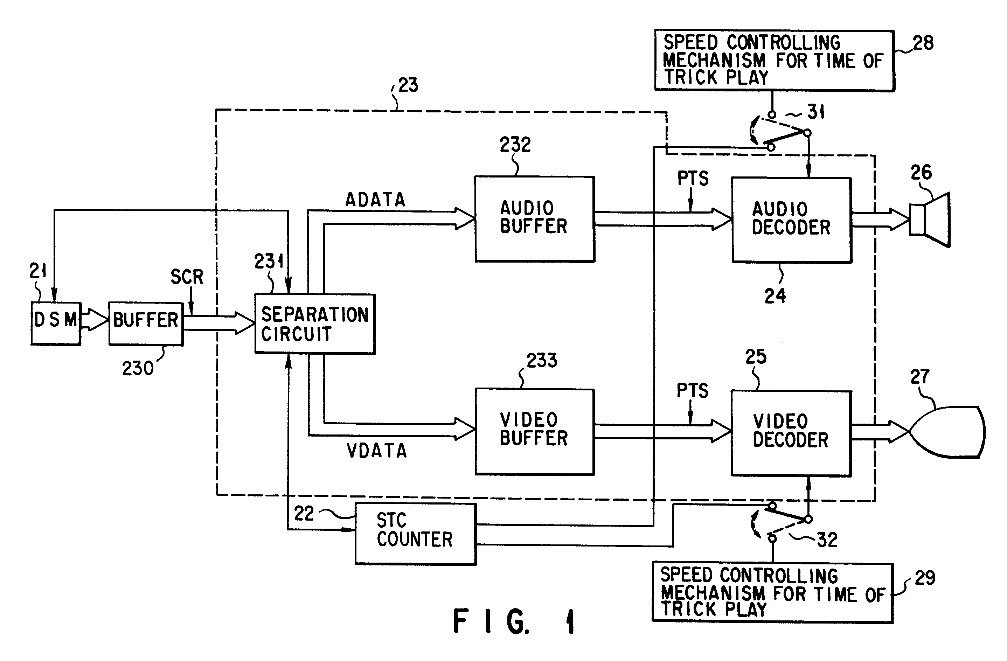

FIG. 1 is a block diagram showing the structure of a conventional motion picture play apparatus. In the figure, a thick arrow line shows the flow of data, and a thin arrow line shows the supply of a control signal.

In a DSM (Digital Storage Media) 21 such as a CDROM or a video DC, multiplexed data (compressed data) of video data and audio data is stored.

Compression data (bit stream) transmitted from the DSM 21 is passed through a buffer 230 and fetched to a STD buffer 23 by timing of a count of a STC counter 21 in accordance with the above-mentioned SCR, and is extracted from the STD buffer 23 in accordance with the PTS. In other words, the STD buffer 23 is a mechanism, which is encoded based on the above-mentioned STD. In this case, the above SRC and the respective PTSs are already adjusted by an encoder (not shown) for producing compressed data.

Data of the DSM 21 is fetched to a separation circuit 231 of the STD buffer 23 in accordance with the SCR. The separation circuit 231, which includes the structure of a multiplexer, separates composite data sent from the DSM 21 into audio data ADATA and video data VDATA. The bit streams of the respective audio data and video data are transmitted to an audio buffer 232 and a video buffer 233, respectively to be stored therein.

As mentioned above, the PTS, which is present to correspond to each of the audio and the video, serves as a timing control signal to suitably accord with an amount of data of the respective bit streams based on the STD buffer 23. Thereby, the respective corresponding data is sent to an audio decoder 24 and a video decoder 25 by timing not to cause the overflow of data and the underflow of data in each of an audio buffer 232 and a video buffer 233. The audio decoder 24 and the video decoder 25 decode data to be input so as to synchronize the audio with a speaker 26 and the video with a display device 27 based on the timing of the STC counter 22.

As mentioned above, the meaning of the standard of MPEG is defined to three time data, that is, STC counter 22, SCR, and PTS.

More specifically, the STC counter 22 is a counter, which serves as a timer of an entire system, and which is counted up by a constant frequency of 90 kHz. SCR is time when the bit stream is fetched to the STD buffer 23. PTS is time when the bit stream is removed from the STD buffer 23, that is, time when each decoding is performed in each of the video and the audio. Timing of each of SCR and PTS is determined by the STD buffer 23, and each of SCR and PTS follows the bit stream.

The STC counter 22 is counted up by the constant frequency. However, the adjustment of the motion picture play system is needed when the synchronous difference between any of SCR, PTS of the video and PTS of the audio and timing of STC is gradually expanded. The following four adjusting methods can be considered.

First, the motion picture play system is structured such that the STC counter is not adjusted. In other words, the DSM 21 sends the bit stream to the STD buffer 23 to adjust to the STC. The video and the audio are decoded to adjust to the STC. In comparison between the value of the PTS and that of STC counter 22, if the value of the PTS is larger than that of the STC counter 22, the decoder of each of the video and the audio stops the decoding operation until the value of the STC counter catches up with the value of the PTS. Also, if the value of the STC counter 22 is larger than that of the PTS, the value of the PTS is set to catch up with the value of the STC counter 22.

Second, the motion picture play system is structured to adjust to the SCR. When the DSM 21 sends the bit stream to the buffer 23, the STC is adjusted to the SCR (the signal of the SCR is substituted for the STC counter). The video and the audio are decoded to adjust to the STC.

Third, the motion picture play system is structured to adjust to the PTS of the video. When the video decoder 25 performs the decoding, STC is adjusted to the PTS (the signal of the PTS of the video is substituted for the STC counter). The DSM 21 sends the bit stream to the buffer 23 to adjust to the STC. The audio is decoded to adjust to the STC.

Fourth, the motion picture play system is structured to adjust to the PTS of the audio. When the audio decoder 24 performs the decoding, STC is adjusted to the PTS (the signal of the PTS of the audio is substituted for the STC counter). The DSM 21 sends the bit stream to the buffer 23 to adjust to the STC. The video is decoded to adjust to the STC.

According to the above-mentioned structure, since the STC counter 22 is always counted up by the frequency of 90 kHz, the STD 23 using the STC counter 22 cannot be managed during the trick play such as a slow play, a fast-feeding play, and a pause. In order to solve the above problem, speed controlling mechanism 28 and 29 for the time of the trick play are provided to the the audio decoder and the video decoder, respectively. At the time of the trick play, the operation is changed to the speed controlling mechanism 28 and 29 in a state separating from time management of the STC counter 22, by change-over circuits 31 and 32. In other words, by changing the operation to the speed controlling mechanisms 28 and 29 for the time of the trick play during the time of the trick play, the play speed is changed. Due to this, neither the video nor the audio cannot perform the play based on the STC.

Therefore, for returning the trick play to the normal play, the STD buffer 23 must be managed again by the following method.

More specifically, the separation circuit 231 substitutes SCR for STC counter 22 after timing of SCR appears in the bit stream sent from the DSM 21.

At this time, the value of STC is not ensured from the returning till the appearance of SCR in the bit stream. Since the decoder of each of the video and the audio are operated in accordance with STC, the video and the audio are disordered.

As mentioned above, there is generated time lag since the above-mentioned process is performed in returning from the trick play to the normal play. Also, the necessity of the special mechanism such as the speed controlling mechanisms for the time of the trick play has a great influence on the manufacturing cost and the integration.

An object of the present invention is to provide a motion picture play apparatus, which can smoothly return to a normal play using no speed controlling mechanism for separating from a STC counter at the time of the trick play, and a motion picture play processing circuit.

In order to achieve the above object, there is provided a motion picture play apparatus characterized by comprising a separation circuit for separating digital data into audio data and video data; an audio buffer and a video buffer for storing each of data of the separation circuit; an audio decoder and a video decoder for decoding data of each of the audio buffer and the video buffer; and a variable counter circuit for controlling timing when each of the audio decoder and the video decoder fetches data from each of the audio buffer and the video buffer in accordance with an outer control signal.

According to the above-explained structure of the present invention, the clock itself, which is the basis of the operation timing, can be changed by the variable STC counter. Due to this, the trick play can be played as the audio decoder and the video decoder are being played as in the same manner as the time of the normal play. Also, data transfer from the medium is controlled by the variable counter means, thereby the buffers can be controlled during the trick play, and the respective decoders can be synchronized. Due to this, the initialization of the variable counter is not needed in returning the trick play to the normal play.

This invention can be more fully understood from the following detailed description when taken in conjunction with the accompanying drawings, in which:
FIG. 1 is a block diagram showing the structure of a conventional motion picture play apparatus;
FIG. 2 is a block diagram showing the structure of a first embodiment of the present invention; and
FIG. 3 is a block diagram showing the structure of a second embodiment of the present invention.

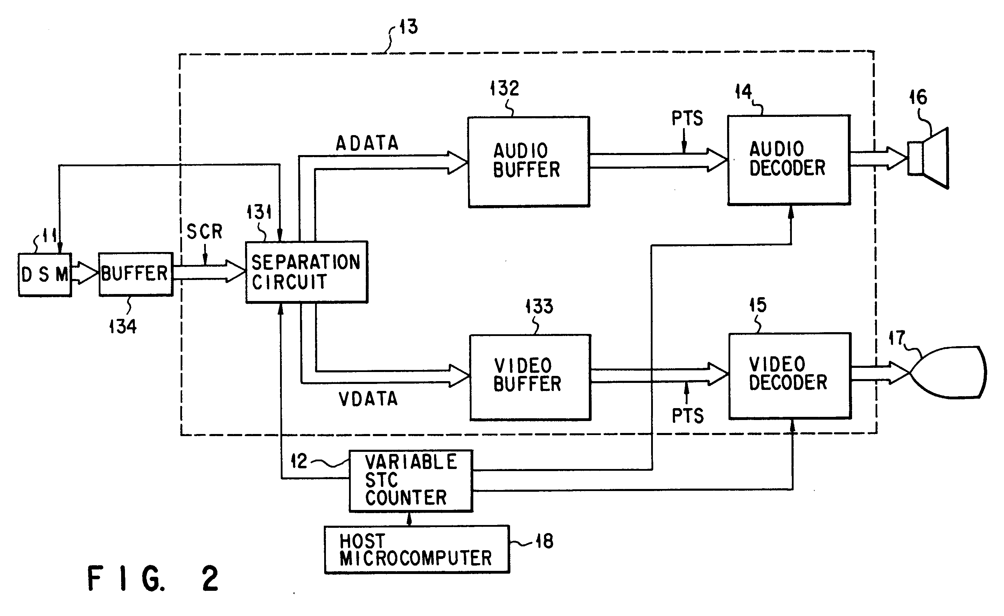

FIG. 2 is a block diagram showing the structure of a first embodiment of the present invention. In the figure, a thick arrow line shows the flow of data, and a thin arrow line shows the supply of a control signal. Composite data (compressed data) of video data and audio data are stored in a DSM (Digital Storage Media) 11. Compressed data (bit stream) sent from the DSM 11 is passed through a buffer 134, and fetched to a buffer 13 by timing when a value of a variable STC counter 12 conforms to system clock reference (SCR). Data of the DSM 11 is fetched to a separation circuit 131 of the STD (System Target Decoder) buffer 13. The buffer 134 is provided to store data, which is before the data separation, when the separation circuit 131 is not operated to be synchronized with data transfer from the DSM 11. The separation circuit 131 comprises the structure of the demultiplexer, and separates the composite data, which is sent from the DSM 11, into audio data ADATA and video data VDATA. The bit streams of audio data ADATA and video data VDATA are transmitted to an audio buffer 132 and a video buffer 133 to be stored therein, respectively. A PTS (Presentation Time Stamp) is a timing control signal to suitably accord with an amount of data of the respective bit streams based on the STD buffer. The PTS is present to correspond to each of the audio and the video. The PTS controls timing in order not to cause data overflow or data underflow in the buffer of each of the audio buffer 132, and the video buffer 133. Thereby, the respective corresponding data is sent to an audio decoder 14 and a video decoder 15. The audio decoder 14 and the video decoder 15 decode data to be input so as to synchronize the audio with a speaker 16 and the video with a display device 17 based on the timing of the variable STC counter 12. The SCR and PTS are also controlled under the management of the design of the STD buffer to determine each timing.

According to the present invention, the variable STC counter 12 is provided in place of the conventional STC counter for counting up by a constant frequency. Then, unlike the conventional case, the speed controlling mechanism for the time of the trick play is not needed. The variable STC counter 12 is structured to be division-controlled by an outer system clock signal of a host microcomputer 18 and a command signal. Thereby, the trick play such as the fast-feeding play and the slow play can be executed as the audio decoder 14 and the video decoder 15 are synchronized with each other in accordance with the STC. In other words, according to the structure of the present invention, the STD buffer can be controlled during the trick play, and the special play can be performed as using the conventional synchronous difference correcting mechanism.

In other words, when the synchronous difference between any of SCR, PTS of the video and PTS of the audio and timing of STC is gradually expanded, the trick play can be executed by the above-mentioned first and second adjusting methods of the motion picture play system. For this reason, the motion picture play system can smoothly return to the normal play. More specifically, the synchronous difference correction can be adjusted by the following two method. In this case, it is noted that STC means the variable STC (System Time Clock), which is applied to the present invention.

First, the motion picture play system is structured such that the STC counter is not adjusted. In other words, the DSM 11 sends the bit stream to the STD buffer 13 to adjust to the STC. The video and the audio are decoded to adjust to the STC.

Second, the motion picture play system is structured to adjust to the SCR. When the DSM 11 sends the bit stream to the buffer 13, the STC is adjusted to the SCR (the signal of the SCR is substituted for the STC counter). The video and the audio are decoded to adjust to the STC.

According to the structure of the first embodiment, the variable STC counter 12 serves as a master of time management, and the DSM 11 transfers data at the speed adjusting to the variable STC counter. In other words, the data transmission from the DSM 11 and the synchronous control of the audio decoder 14 and the video decoder 15 can be easily achieved. By the variable counter 12, the speed of the counter-up can be changed to adjust to the play speed during the trick play. Also, in the normal play returned from the trick play, the synchronization easily using STC and the buffer management of data storage can be executed.

The following will explain the respective trick play.

First, the slow play delays the operation of the variable STC counter. Second, the fast play speeds up the operation of the variable STC counter. Third, the pause/stop plays stop the operation of the variable STC counter. Fourth, the frame feeding/scanning intermittently count up the variable STC counter. In the scanning, data of some pictures may be only scanned without being decoding so as to perform the intermittent play. Fifth, the freezing/blanking plays are performed in the same manner as the normal play. In this case, the freezing is performed at the same speed as the case of the normal play. However, the display device is set to the pause state. The blanking is performed at the same speed as the case of the normal play. However, the video display is set to the blank state (nothing is displayed).

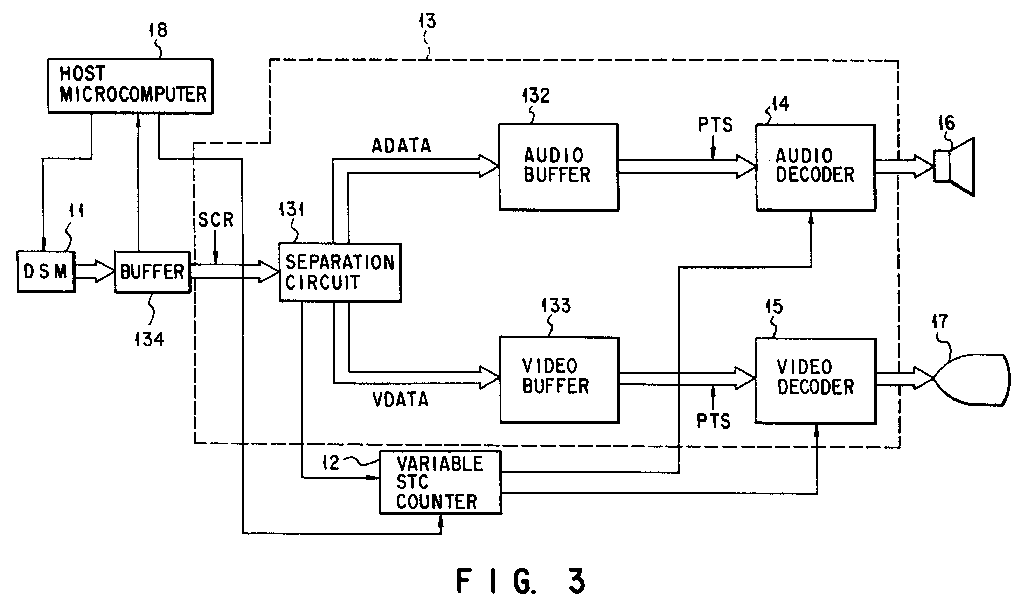

FIG. 3 is a block diagram showing the structure of a second embodiment of the present invention. In FIG. 3, the same reference numerals are added to the portions common to FIG. 2. FIG. 3 shows that DSM is structured as a master of time management. The trick play such as the fast play and the slow play can be executed as being synchronized with each other based on the STC. Also, the host microcomputer 18 controls the command of data transmission to DSM 11 as monitoring an amount of data, which is before the separation from the DSM 11. The host microcomputer 18 also controls the speed of the variable STC counter 12, so that a suitable STC value of the variable counter 12 is determined in accordance with data transmission to the DSM 11.

According to the above-explained structure of each of the embodiments, the clock itself, which is the basis of the operation timing, can be changed by the variable STC counter. Due to this, the trick play can be played as the audio decoder and the video decoder are being played as in the same manner as the time of the normal play. In the conventional case, the STC counter was always counted up by the constant frequency. Due to this, the speed control mechanism for the trick play, which is separated from the STC counter must be used in executing the trick play such as the slow play, the fast-feeding, and the pause. Therefore, much time was required to execute the synchronization and the management of the STD buffer again in returning the trick play to the normal play. However, according to the present invention, the management of the STD buffer, which includes the audio and video buffers, can be executed during the trick play. Due to this, the trick play can be smoothly returned to the normal play. Particularly, in a case where the STC serves as a master, it is unnecessary to manage the STD buffer again in returning the trick play to the normal play. Also, since the fast/slow of the audio can be played, the video and the audio can be synchronized with other during the trick play. Moreover, the mechanism of controlling the play speed for the trick play (28, 29 of FIG. 1) is not needed since the play mechanism, which is adjusted to the variable STC counter, is provided. Thereby, there can be provided the motion picture play apparatus and the motion picture play processing circuit, which are contributed to the integration of the circuit, and the decrease in the manufacturing cost.

## Claims

1. A motion picture play apparatus characterized by comprising:
a separation circuit (131) for separating digital data into audio data and video data;
an audio buffer (132) and a video buffer (133) for storing each of data of said separation circuit (131);
an audio decoder (14) and a video decoder (15) for decoding data of each of said audio buffer (132) and said video buffer (133); and
a variable counter circuit (12) for controlling timing when each of said audio decoder (14) and the video decoder (15) fetches data from each of said audio buffer (132) and the video buffer (133) in accordance with an outer control signal.

2. The apparatus according to claim 1, characterized by further comprising a medium (11) for storing said digital data; and
a control circuit (18) for supplying said outer control circuit,
wherein said variable counter circuit (12) has a counter period controlled by said control circuit (18), and controls timing when each of said audio decoder (14) and the video decoder (15) fetches data from each of said audio buffer (132) and the video buffer (133), and timing when said medium (11) transmits data to said separation circuit (131).

3. The apparatus according to claim 2, characterized by further comprising a buffer circuit (134), provided at a front stage of said separation circuit (131), for storing said digital data.

4. The apparatus according to claim 1, characterized by further comprising a medium (11) for storing said digital data;
a control circuit (18) for supplying said outer control circuit; and
a buffer circuit (134), provided at a front stage of said separation circuit (131), for storing said digital data,
wherein said variable counter circuit (12) has a counter period controlled by said control circuit (18), and controls timing when each of said audio decoder (14) and the video decoder (15) fetches data from each of said audio buffer (132) and the video buffer (133), and timing when said medium (11) transmits data to said separation circuit (131).

5. The apparatus according to claim 1, characterized by further comprising a medium (11) for storing said digital data;
a control circuit (18) for supplying said outer control signal; and
a buffer circuit (134), provided at a front stage of said separation circuit (131), for storing said digital data,
wherein said control circuit (18) controls timing of data transmission of said medium (11) and the counter period of said variable counter circuit (12)in accordance with an amount of data of said buffer circuit (134), and timing of data transmission of said medium (11) is supplied to said variable counter circuit (12), thereby said variable counter (12) is count-controlled based on timing of data transmission of said medium (11).
